# EUROPEAN PATENT SPECIFICATION

(11) **EP 0 658 696 B1**
(45) Date of publication and mention of the grant of the patent: **25.02.1998**
(21) Application number: 94500201.2
(22) Date of filing: 14.12.1994
(51) Int. Cl.: F16C 1/22

(54) **Bowden cable adjusting device**
Nachstellvorrichtung für einen Bowdenzug
Dispositif de rattrapage de jeu pour câble Bowden

(30) Priority: 14.12.1993 ES 9302586
(43) Date of publication of application: 21.06.1995
(73) Proprietor: IRAUSA INGENIERIA, S.A., E-09007 Burgos (ES)
(72) Inventor: Casado Merino, José Antonio, E-09003 Burgos (ES)
(74) Representative: Urteaga Simarro, José Antonio

(56) References cited:
- EP-A- 0 224 399
- EP-A- 0 234 814
- DE-A- 2 014 129
- DE-A- 3 101 498
- DE-U- 8 807 826
- US-A- 4 869 123

## Description

This invention relates to a tensor or tensioner for traction cables guided by flexible conductors. The use of multicore steel cables in the transmission of movements over a distance by means of winding on a drum implies the need for a system for tensing the cable so that it gathers up the elongation through stretching of the cable caused by the settling of each of the strands of wire that make up each cable, all of which is the result of the successive passing of the said cable over pulleys and other devices for changing direction which are included in the kinematic chain. This elongation of the cable is defined as nonreversible.

The cable, like any other element, suffers reversible elastic deformations during its operation, with these deformations being proportional to the stresses to which it is submitted, and on which intervention is not interesting, since these deformations will disappear when the stresses are removed. Acting on this elongation would cause the kinematic chain to be overtightened, which would have repercussions in that the system would operate incorrectly.

Several devices intended for solving the problems of this nonreversible deformation are known but, in general, they have the disadvantages of being made up of a large number of component parts, occupying an excessive amount of space and also needing labour-intensive assembly processes. Their industrialization using automatic techniques is also difficult.

One of these cases is represented in EP-A-0 224 399, whereby a tensor is described in accordance with the preamble of claim 1, in which a locking part and a drive organ provided with a conical part collaborate, with these including pairs of coactive surfaces in the form of a ramp.

This mechanism presents the disadvantages of its complexity and its assembly, which is labour-consuming and complicated.

As opposed to all these known techniques, the objective of the invention is a device or system which is capable of offering all the benefits and advantages of the known systems, while overcoming all their limitations.

Another objective of the invention is to provide a device or system which is small in volume and capable of being placed at any point of the kinematic chain.

A third objective of the system is that when the device or system is integrated into the drive, it is made up of only three parts, one of which is the spring.

A fourth objective of the invention is the fact of being able to eliminate the second spring used in traditional automatic tensing systems and which only adds an extra part to the traditional assembly of window-winders not equipped with an automatic tensor, which is incorporated into the assembled window-winder, because of which it does not interfere in the window-winder assembly systems.

The tensor, according to the invention as defined in claim 1, has the particularity that it is able to differentiate between the reversible elastic elongation or stretching, caused by the tension or stress that the cable is subject to at the stroke ends, and the nonreversible permanent elongation, as a result of the prolonged use of the system.

The tensor, according to the invention as defined in claim 1, is made up of an outer casing, inside which is situated a cylindrical body with a toothed or grooved exterior, which in turn is connected to the cable, with this cylindrical body receiving a spring at one of its ends, and the cable being guided in a cable conductor, and characterized by the provision of a ring-shaped recess in the casing. Some windows or holes that communicate with the cylindrical body are made in the bottom of the said recess.

It is also characterized in that the recess is cut into the casing between two ring-shaped ribs, of which one, corresponding to the one which is further from the spring, is provided with a conical surface in the form of a ramp which tapers outwards from the ring-shaped recess.

In the said ring-shaped recess is housed a flexible cylindrical ring which is provided with an opening according to a generatrix. The height or generatrix of this cylindrical ring is slightly smaller in size than the length of the ring-shaped recess, with the internal surface of this flexible ring resting on the surface of the recess with a small amount of axial play.

The internal surface of the flexible cylindrical ring is provided with three evenly distributed teeth which coincide in position with the windows or holes in the ring-shaped recess in the casing, so that when the ring is housed on the said recess, the three teeth pass through the windows or holes and connect with the teeth of the internal cylindrical support.

The length of the teeth is smaller than the dimension, in an axial direction, of the windows or holes in the ring-shaped recess in the casing, thus constituting an axial set.

One of the ends of the internal surface of the ring is situated at the start of the surface in the form of a ramp or rib on the casing, so that between the end of each tooth and the end of each window or hole, a free space is formed of a size slightly larger than the elastic elongation experienced by the cable.

The ends of the teeth on the ring which are on the side towards the spring have lips or edges which fit into the window in the casing, preventing the said ring from being opened when it is under pressure from the cylindrical support.

The cylindrical support includes a set of teeth, at the end of which, and at the end corresponding to the spring, a circular groove without teeth is provided.

As far as the ring is concerned, and as was stated previously, it is flexible so that it can be opened for insertion into the ring-shaped recess in the casing and so that it can provide the movement between itself and the cylindrical support, as will be explained later.

The system is able to differentiate between flexible temporary stretching and nonreversible elongation, acting consequently, and this is achieved thanks to the relative movement of the ring and of the body or cylindrical support on the casing, and thanks to the relative movement between the ring and the cylindrical body.

On housing the ring in the casing through the windows in the ring-shaped recess, the teeth on the said ring make contact with those of the cylindrical support, leaving the ring inserted at the start of the ramp in the casing and with its teeth at the previously-mentioned distance from the end of the windows, which is slightly greater than the elastic elongation of the cable.

Correct dimensioning of this distance and the proper location of the ramp are the factors which allow the relative movement of the cylindrical ring-body assembly in relation to the casing, so that the cable is kept tensed with this set, which could be called "permanent tensing".

When the elongation of the cable exceeds the pitch of the teeth plus the value of the supposed stretching or elastic elongation, set as stated by the distance from the tooth on the ring to the wall where the window is and the position of the ramp, the teeth jump and, as a result, tightening takes place.

When this occurs, the toothed ring is in its end position towards the ramp and a relative displacement takes place, in the same direction, of the toothed cylindrical body in relation to the casing and the ring. Evidently, this situation takes place at the stroke ends or at any other point at which the cable is submitted to overtension in the branch opposite to that which has the tensor device incorporated, due to the fact that at these times, the elastic stretching is added to the permanent elongation.

Thanks to the above-mentioned relative movement capacity between the tooted cylinder and the ring in relation to the casing, when the cable which is submitted to overtension recovers, a movement of the cylinder and the ring towards the spring takes place, which means that the kinematic chain is not overtensed.

The mobility between the toothed ring and the toothed cylindrical body is carried out due to the elasticity of the ring, which allows it not only to be opened for its insertion into the casing but also to clear the height of the teeth in the forward movement of the toothed cylinder.

Another characteristic of the tensor device worth special mention is the fact that it takes advantage of the full extent of travel of the spring, by having the previously-mentioned ring-shaped recess, which has no teeth whatsoever, arranged on the cylindrical body. The teeth of the toothed flexible ring are housed in this recess at the end of the useful travel of the tensor.

This housing or recess is arranged in such a way that when the force transmitted by the spring is insufficient to cause the opening of the flexible ring, the teeth of the said ring clasp onto the recess, with the system being able, in this way, to keep the cable tense.

All these and other details of the invention can be appreciated in greater detail by referring to the attached sheet of drawings, which is included for guidance only and shows the following:
- Figure 1 is a view of the tensor unit of the invention, cut away to show its toothed position.
- Figure 2 is a perspective of the flexible toothed ring.
- Figure 3 is a side detail of the invention, showing the ring before insertion into the device.
- Figure 4 is another cross-sectional detail showing the insertion of the ring in the ring-shaped recess in the casing.

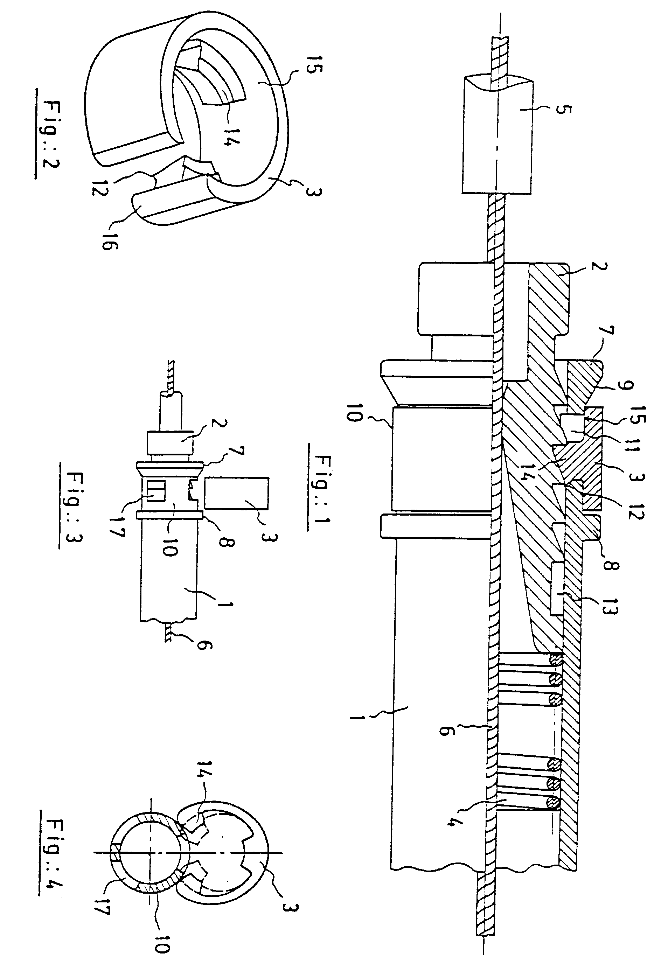

Looking now at Fig. 1, it is possible to see the cable (6) with its cable conductor (5), and the said cable going through the toothed cylindrical support (2). This support (2) is assembled on the casing (1), in which the spring (4) has also been assembled previously.

As regards the toothed ring (3), it is assembled on the casing (1), clasping or clamping the said casing and the support (2) This ring (3) is taken in by the ring-shaped recess (10) in the casing, prepared between the ribs (7) and (8) of the said casing, as can be appreciated.

The ring (3) is provided with a set of protruding teeth (14) towards its interior, which penetrate to the support (2) through a set of windows or holes cut in the base (10) of the ring-shaped recess. The teeth (14) are provided with axial play in relation to the said holes, procuring a space (11) towards the left which is established as slightly larger than the elastic elongation of the cable.

The support (2) can only move towards the left in relation to the ring (3) by virtue of the fitting of the teeth (14) into those of the said support.

The three teeth (14) of the flexible ring have edges or lips (12) which fit into the casing (1) and help to prevent the ring from opening when pressure is exerted on it by the support (2) as it moves towards the right.

The casing (1) is equipped with a ramp (9) on the rib (7), by means of which the opening of the ring (3) is facilitated in the forward movement of the cylindrical support (2).

It can also be appreciated how the internal surface (15) of the ring, from which the teeth (14) protrude rests on the base of the recess (10), close to the start of the ramp (9), in accordance with the position shown in Fig. 1.

The unit includes the spring (4), which is responsible for achieving the relative movement of the support (2) on the casing (1).

The above-mentioned space (11) provides the system with the non-permanent tensing capacity in the presence of the elastic elongations of the cable (6).

Inside this same Fig. 1, we can also observe the non-toothed recess (13) incorporated into the right portion of the casing (2), thus taking advantage of all the useful travel or movement of the spring (4), at the point at which this would not have the capacity of transmitting sufficient force to open the flexible ring and allow the teeth to pass.

As regards Fig. 2, it is possible to appreciate the specific shape of the ring (3) provided with the opening (16) and with the evenly spaced teeth (14) that protrude in its interior (15). This figure also illustrates the lips (12) that protrude from the teeth.

In accordance with Fig. 3, it is possible to check the insertion position of the ring (3) into the casing (1), and to observe the recess (10) in the casing between the ribs (7) and (8) on the casing itself, as well as the windows or holes (17) through which the teeth (14) of the ring (3) pass.

According to Fig. 4, the insertion position of the open ring (3) is illustrated, flexing in opening in order to carry out the positioning as described in Fig.1. The flexibility of the ring (3), both for its initial insertion onto the casing (1) and body (2), and also to allow, with the help of the ramp (9), the passage of teeth in connection with the teeth on the body (2), is of utmost importance, since the behaviour of the whole assembly of the device depends on this flexibility.

It is important to emphasize, once having described the nature and advantages of this invention, the non-restrictive character of the illustrated embodiment, inasmuch as changes in the shape, material or dimensions of its constituent parts will not in any way alter its essence, as long as they do not mean a substantial variation of the whole.

## Claims

1. Tensor for traction cables (6) inserted into a drive mechanism or into an independent support and guided by flexible conductors (5), having
- a casing (1)
- a toothed cylindrical support (2) for the flexible conductor (5) which is mounted axially slidable in the casing (1) and through which the cable (6) can run,
- a spring (4) to bias the toothed cylindrical support (2) axially outwardly, and
- a locking member (3) carried on the housing characterized in that
- the casing (1) is provided with a ring-shaped portion (10) with a reduced outer diameter, in which three windows or holes (17) have been cut, evenly spaced and communicating with the interior where the toothed cylindrical support (2) is housed,
- the ring-shaped portion (10) of the casing is bound on each side by a projection or rib (7,8), one (8) of which is perpendicular to the longitudinal axis, on the side nearer the spring (4), whereas the other (7) is provide with a ramp (9) and is further away from the spring,
- a ring-shaped recess (13) is cut in the toothed cylindrical support, near the end there of, on the side towards the spring and at the end of the teeth,
- the locking member is a cylindrical flexible ring (3), provided with an opening (16) extending according to a generatrix, inside of which three teeth (14) are formed, separated from each other at an angle of 120 degrees and partially occupying the height of the ring, which fit into the windows or holes (17) in the ring-shaped recess in the casing (1) until they connect with the teeth (14) in the cylindrical support (2), with the width of the teeth (14) being such that they provide axial play in the said windows (17), maintaining a distance (11) between the teeth (14) and the side of the windows nearer to the ramp (9) on the casing, and connecting with the other side of the said windows by means of lips (12) which protrude from the three teeth,
- the portion (15) of the ring (3) from which the three teeth project rests on the outer surface of the ring-shaped recess in the casing.

2. Tensor for traction cables guided by flexible conductors, in accordance with claim 1, characterized in that the cylindrical flexible ring (3) is made of thermoplastic material capable of undergoing reversible deformations.

3. Tensor for traction cables guided by flexible conductors, in accordance with claim 1, characterized in that the space which is left between the teeth (14) of the ring (3) and the sides of the windows in the casing, on the side nearer to the ramp, is slightly greater than the elastic elongation undergone by the cable.

## Patentansprüche

1. In einen Antriebsmechanismus oder eine unabhängige Halterung eingesetzter und durch eine Leitungsschnur (5) geführter Spanner für Zugkabel (6), mit
- einem Gehäuse (1),
- einer gezahnten zylindrischen Halterung (2) für die Leitungsschnur (5), die axial verschiebbar in das Gehäuse (1) montiert ist und durch die das Kabel (6) laufen kann,
- einer Feder (4), um die gezahnte zylindrische Halterung (2) axial nach aussen zu treiben,
- einem auf dem Gehäuse aufmontierten Verschlussglied (3), das sich dadurch kennzeichnet, dass
- das Gehäuse (1) mit einem Ringteil (10) mit vermindertem Aussendurchmesser ausgestattet ist, in das drei gleichmässig verteilte und mit dem Inneren verbundene Fenster oder Löcher (17) eingeschnitten sind. Im Inneren lagert die gezahnte zylindrische Halterung (2),
- dem Ringteil (10) des Gehäuses, das an jeder Seite mit zwei Vorsprüngen oder Rippen (7, 8) endet, von denen eine (8) senkrecht zur Längsachse auf der der Feder (4) näheren Seite steht, während die andere (7) mit einer Rampe (9) ausgestattet ist und sich weiter von der Feder entfernt befindet,
- ein ringförmiger Einschnitt (13) ist an der gezahnten zylindrischen Halterung, nahe deren Ende auf der Seite zur Feder und am Ende der Zähne angebracht,
- dem Verschlussglied, das ein flexibler zylindrischer mit einer einer Mantellinie entsprechenden Öffnung (16) versehener Ring (3) ist, in dessen Inneren sich drei voneinander in einem Winkel von 120 Grad entfernte Zähne (14) bilden, die teilweise die Höhe des Rings besetzen und in die Fenster oder Löcher (17) des ringförmigen Einschnitts des Gehäuses (1) passen, bis sie sich mit den Zähnen (14) der zylindrischen Halterung (2) treffen, wobei die Breite der Zähne (14) so gestaltet ist, dass sie in den erwähnten Fenstern (17) ein axiales Spiel gestatten und dabei zwischen den Zähnen (14) und der Seite der der Rampe (9) des Gehäuses näheren Fenster eine Entfernung (11) beibehält,
und sich mittels an den drei Zähnen vorstehender Lippen (12) mit der anderen Seite der besagten Fenster trifft,
- dem Teil (15) des Rings (3), von dem aus die drei Zähne vorspringen, ruht auf der äusseren Fläche des ringförmigen Einschnitts des Gehäuses.

2. Durch Leitungsschnüre geführter Spanner für Zugkabel entsprechend dem 1. Patentanspruch, der sich dadurch kennzeichnet, dass der flexible zylindrische Ring (3) aus einem für reversible Verformungen anfälligen thermoplastischen Material besteht.

3. Durch Leitungsschnüre geführter Spanner für Zugkabel entsprechend dem 1. Patentanspruch, der sich dadurch kennzeichnet, dass der zwischen den Zähnen (14) des Rings (3) und den Seiten der Fenster des Gehäuses von der der Rampe näheren Seite aus bleibende Raum leicht über der von dem Kabel erfahrenen elastischen Ausdehnung liegt.

## Revendications

1. Tenseur pour câbles de traction (6), inséré dans un mécanisme conducteur ou sur un support indépendant et guidé par conducteurs flexibles (5), comportant
- une carcasse (1),
- un support cylindrique denté (2) pour le conducteur flexible (5), lequel est monté de manière axiale ce qui lui permet de glisser sur la carcasse (1) et à travers lequel le câble peut passer,
- un ressort (4) servant à impulser le support cylindrique denté (2) axialement vers le dehors.
- un membre de fermeture (3) monté sur la carcasse qui se caractérise en ce que la carcasse (1) est dotée d'une portion annulaire (10) de diamètre extérieur rabaissé dans laquelle ont été pratiquées trois fenêtres (17) régulièrement distribuées et communiquant avec l'extérieur dans lequel se trouve logé le support cylindrique denté (2),
- la portion annulaire de la carcasse est terminée par deux saillants (7), l'un perpendiculaire à l'axe longitudinal, du côté du ressort (4), et l'autre doté de rampe (9), vers l'autre côté,
- une mortaise annulaire (13) est pratiquée dans le support cylindrique denté près de l'extrémité, du côté se trouvant vers le ressort et à la fin des dents,
- le membre de fermeture est un cercle flexible cylindrique (3) doté d'une ouverture (16) étendue selon une génératrice, à l'intérieure de laquelle sont pratiquées trois dents (14) séparées de 120 degrés qui occupent partiellement la hauteur du cercle et s'encastrent dans les fenêtres (17) de la rainure annulaire de la carcasse jusqu'à se raccorder avec les dents (14) du support cylindrique, la largeur des dents étant telle qu'elle peut jouer sur le plan axial avec lesdites fenêtres en conservant une distance entre les dents et le bord latéral des fenêtres du côté de la rampe (9) de la carcasse,
et en contactant avec l'autre bord latéral desdites fenêtres au moyen de lèvres (12) qui dépassent des trois dents,
- la portion (15) du cercle (3) de laquelle dépassent les trois dents repose sur la surface extérieure de la rainure angulaire de la carcasse.

2. Tenseur pour câbles de traction guidés par des conducteurs flexibles, selon la première revendication, se caractérisant par le fait que le cercle flexible cylindrique (3) est en matériel thermoplastique susceptible de souffrir des déformations réversibles.

3. Tenseur pour câbles de traction guidés par conducteurs flexibles, selon la première revendication, se caractérisant par le fait que l'espace qui reste entre les dents (14) du cercle (3) et des bords latéraux des fenêtres de la carcasse, du côté de la rampe, est légèrement supérieur à l'allongement élastique que le câble subit.
